# EUROPEAN PATENT SPECIFICATION

(11) **EP 3 108 740 B1**
(45) Date of publication and mention of the grant of the patent: **24.02.2021**
(21) Application number: 16175544.2
(22) Date of filing: 21.06.2016
(51) Int. Cl.: A01D 78/10

(54) **A RAKE ELEMENT ARM FOR AN AGRICULTURAL MACHINE FOR WORKING GRASS, HAY OR OTHER CROPS, AS WELL AS SUCH AN AGRICULTURAL MACHINE**
RECHENELEMENTARM FÜR EINE LANDWIRTSCHAFTLICHE MASCHINE ZUR BEHANDLUNG VON GRAS, HEU ODER ANDEREN KULTURPFLANZEN SOWIE SOLCH EINE LANDWIRTSCHAFTLICHE MASCHINE
BRAS D'ÉLÉMENT DE RÂTEAU POUR UNE MACHINE AGRICOLE DE TRAVAIL D'HERBE, DU FOIN, OU D'AUTRES RÉCOLTES, ET UNE TELLE MACHINE AGRICOLE

(30) Priority: 26.06.2015 NL 2015036
(43) Date of publication of application: 28.12.2016
(60) Divisional application: 19168936.3
(73) Proprietor: Forage Company B.V., 3147 PB Maassluis (NL)
(72) Inventor: VAN DER LELIJ, Bart, 3147 PB Maassluis (NL)
(74) Representative: AGCO Intellectual Property Department

(56) References cited:
- EP-A1- 1 362 505
- DE-U- 1 907 226
- FR-A1- 2 043 606
- GB-A- 1 189 224
- US-A- 3 638 977

## Description

The present invention relates to a rake element arm for an agricultural machine for working grass, hay or other crops on the field, as well as such an agricultural machine.

Even if the description refers to "rake element arm" and "rake elements", these features are not claimed as such, as the subject-matter of the claimed invention relates respectively to specific "tine arm" and "tines".

EP1362505A1 discloses a machine for working grass, hay or other crops. This machine comprises a frame that can be pulled by a pulling vehicle, for example a tractor. On the frame, one end of a rake member arm is mounted. The other end of the rake member arm supports a rake member. The rake member comprises a centre body, rotatably mounted on the rake member arm, a plurality of rake element arms extending from the centre body, and one or more rake elements mounted on each rake element arm. The rake member arm is movable between a transport position in which the rake element arm extends in a substantially vertical plane and a working position in which the rake element arm extends in a substantially horizontal plane. In the transport position, the upper rake elements tend to be too high. Therefore, some of the rake element arms are provided with a hinge that allows an outer arm part of the rake element arm to hinge about the outer end of an inner arm part so as to reduce the length of the rake arm for transport.

To lock the inner arm part and the outer part in the working position, a separate pin is provided that can be arranged in holes provided on the inner arm part and the outer arm part. When the inner arm part and outer arm part are arranged in the working position, these holes are aligned to allow the pin to be inserted in the holes of both the inner arm part and the outer arm part. When it is desired to arrange the rake element arm in the transport position, the separate pin must be taken out of the aligned holes of the inner arm part and the outer arm part, to allow a folding movement of the outer part arm to the transport position. A drawback of the machine of EP1362505A1 is that the separate pin is easily lost.

US3638977A and DE1907226U are further prior documents.

A first object of the invention is to provide an improved rake element arm for such an agricultural machine, which in particular provides a more user-friendly and/or reliable locking device to lock the inner and outer arm part of the foldable rake element arm. A second object of the invention is to provide an agricultural machine comprising such an improved rake element arm.

Said first object is achieved according to a first aspect of the invention by a tine arm for an agricultural machine for working grass, hay or other crops on the field, wherein one or more tines are mounted on the tine arm, the tine arm comprising:
- a first arm part and a second arm part which are pivotally connected to each other between a working position and a transport position, and
- a locking device configured to lock the first arm part with respect to the second arm part in the working position,
wherein the locking device comprises:
- a locking pin movably mounted on the first arm part between a locking position and a non-locking or releasing position, and
- a first slot and second slot which are mounted on the second arm part, wherein the first slot is arranged to receive the locking pin in the locking position when the first arm part and the second arm part are positioned in the working position to lock the first arm part with respect to the second arm part in the working position, and wherein the second slot is arranged to receive the locking pin in the locking position when the first arm part and the second arm part are positioned in the transport position to lock the first arm part with respect to the second arm part in the transport position
- a hinge that hingeably connects the first arm part to the second arm part, wherein the hinge comprises a first hinge part mounted on the first arm part and a second hinge part mounted on the second arm part,
wherein the hinge comprises a hinge axis which is arranged at a position spaced from the end of the second arm part, wherein the first slot is mounted on the second arm part at a first side of the hinge axis, and characterised in that the second slot is mounted on the second arm part at a second side of the hinge axis opposite to the first side.

As a result, the rake element arm according to the invention and the agricultural machine provided therewith is reliable, durable and user-friendly.

By spacing the hinge from the end of the second arm part in a direction parallel to the longitudinal axis and towards the second end of the second arm part, the first slot and the second slot can be arranged on the second arm part at opposite sides of the hinge. The first slot may, for example, be arranged between the hinge axis and the end of the second arm part located adjacent to the first arm part and the second slot may be arranged at the other side of the hinge axis. As a result, the second arm part can be pivoted about the hinge axis between the working position, in which the first slot is aligned with the locking pin, and a transport position, in which the second slot is aligned with the locking pin. The hinge axis of the hinge may also be spaced from the end of the first arm part in a direction parallel to the longitudinal axis of the first arm part and away from the first arm part.

The above-mentioned second object of the invention is achieved according to a second aspect of the invention by an agricultural machine for working grass, hay or other crops, comprising:
a frame,
a rake member arm mounted on the frame,
a rake member, the rake member comprising:
   - a centre body, rotatably mounted on the rake member arm,
   - at least one tine arm extending from the centre body, and
   - one or more rake elements mounted on the tine arm,
wherein the tine arm comprises a first arm part and a second arm part, which are hingeably connected to each other between a working position and a transport position, and
wherein the rake member comprises a locking device adapted for locking the first arm part with respect to the second arm part in the working position, and
wherein the locking device comprises:
a locking pin movably mounted on the first arm part between a locking position and a non-locking or releasing position,
a first slot and second slot which are mounted on the second arm part, wherein the first slot is arranged to receive the locking pin in its locking position when the first arm part and the second arm part are positioned in the working position to lock the first arm part with respect to the second arm part in the working position, and wherein the second slot is arranged to receive the locking pin in its locking position when the first arm part and the second arm part are positioned in the transport position to lock the first arm part with respect to the second arm part in the transport position
a hinge that hingeably connects the first arm part to the second arm part, wherein the hinge comprises a first hinge part mounted on the first arm part and a second hinge part mounted on the second arm part,
wherein the hinge comprises a hinge axis which is arranged at a position spaced from the end of the second arm part, wherein the first slot is mounted on the second arm part at a first side of the hinge axis, and characterised in that the second slot is mounted on the second arm part at a second side of the hinge axis opposite to the first side.

The machine according to the second aspect of the invention comprises at least one rake member, for example one or two or more rake members. Each rake member is carried by a respective rake member arm. The rake member may be a raking rotor. At least one of the rake element arms is constructed in accordance with the first aspect of the invention, i.e. it has a first arm part and a second arm part that are hingeably connected to each other about a hinge axis between a working position and a transport position. For example, the first arm part is an inner arm part connected to the rotating centre body, and the second arm part is an outer arm part, wherein the one or more tines, are mounted on the outer arm part.

The locking device is configured to lock the first arm part and the second arm part with respect to each other in a working position and in a transport position. In the working position of the first and second arm parts, the first and second arm parts are substantially aligned with respect to each other, in particular the longitudinal axes of the first and second arm parts substantially coincide. In the transport position of the first and second arm parts, the first and second arm parts are at least partially folded with respect to each other, in particular the second arm part is hinged with respect to the first arm part so as to reduce the length of the rake element arm.

The locking device comprises a locking pin that is movably mounted on the first arm part. It is noted that the locking pin may directly or indirectly be mounted on the first arm part. Indirectly mounted means that the locking pin may be mounted on a part of the locking device, for example a hinge part, or another part of the machine, that in its turn is mounted on the first arm part. The locking pin is movable between a locking position and a non-locking or releasing position. The locking device also comprises a first slot and second slot mounted on the second arm part. The first slot is configured to cooperate with the locking pin to lock the first arm part with respect to the second arm part in the working position. The second slot is configured to cooperate with the locking pin to lock the first arm part with respect to the second arm part in the transport position.

With the rake element arm and the agricultural machine according to the invention, the locking pin is mounted on the first arm part so that the locking pin cannot get lost. Furthermore, the locking pin is used to lock the first arm part and the second arm part both in the working position and the transport position. As a result, the first and second arm parts can be locked in the working position and the transport position in a reliable manner.

It is noted that GB1189224A discloses an implement for the displacement of crop lying on the ground. The implement comprises a frame movable over the ground and two adjacently mounted rake heads that are arranged to be mechanically rotated during use. Each rake head includes a plurality of tine-supporting arms. At least two of said arms of at least one rake head can be brought simultaneously from an operative to an inoperative or transport position in which the implement is of reduced overall width as compared with the width thereof when said arms occupy their operative positions.

In an embodiment according to the invention, the first hinge part comprises a cylindrical part adapted to be mounted on the end of the first arm part, and a recessed cylindrical part adapted to receive a part of the second arm part in the working position. During use substantial forces may be exerted on the rake element arm when grass, hay or other crop is displaced on the field. Therefore, it is advantageous to be able to transfer substantial forces from the second arm part to the first arm part. By providing a first hinge part that has a cylindrical part mounted on the end of the first arm part and a recessed, for example half open, cylindrical part to receive a part of the second arm part in the working position, a relative rigid connection between the first arm part and the second arm part is formed. Such a construction may also reduce the forces exerted on the hinge.

In a preferred embodiment according to the invention, the locking pin is biased towards the locking position. The locking pin may, for example, be biased towards the locking position by a spring element. By biasing the locking pin towards the locking position, for example by using a spring element, an inadvertent release of the locking pin between the first arm part and the second arm part in either the working position or the transport position can be avoided or at least substantially be prevented. Thus, the first and second arm parts can be locked in a very reliable manner.

In an embodiment according to the invention, the locking pin is mounted in a locking pin housing. The locking pin housing is a housing that receives the locking pin, while it allows a sliding movement of the locking pin in a direction of movement parallel to its longitudinal axis, whereby the locking pin is movable between the locking position and the non-locking or releasing position. The locking pin housing may, for example, be formed by a first locking pin holder and a second locking pin holder, wherein the first and second locking pin holders have openings to receive the locking pin therein.

In a further embodiment according to the invention, the locking pin is rotatable about its longitudinal axis, wherein the locking pin comprises a cam extending at least partially transversely to the longitudinal axis of the locking pin, and wherein the locking pin housing comprises a cam surface adapted to cooperate with the cam such that by rotation of the locking pin about its longitudinal axis the cam of the locking pin moves along the cam surface to move the locking pin from its locking position towards its non-locking or releasing position and/or from its non-locking or releasing position towards its locking position. When the locking pin has to be moved to the non-locking or releasing position, the locking pin may have to be moved against the biasing force of a spring element. To facilitate this movement of the locking pin, a cam may be provided that extends at least partially transversely to the longitudinal axis of the locking pin. The cam may be formed by a protrusion arranged on the outer cylindrical surface of the locking pin. The cam cooperates with the cam surface, for example a sloped or curved surface, provided in the locking pin housing, such that rotation of the locking pin about its longitudinal axis results in movement of the cam along the cam surface. The cam surface is shaped in such a way that movement of the cam along the cam surface, caused by rotation of the locking pin about its longitudinal axis, results in a movement of locking pin towards the non-locking or releasing position. Rotation of the locking pin in the opposite direction will result in movement of the locking pin towards the locking position.

In an embodiment according to the second aspect of the invention, the machine comprises two rake members, which are arranged at opposite sides of the frame. The machine according to the second aspect of the invention may also comprise more rake members, for example three, four, five or six rake members. In particular, each rake member is carried by a respective rake member arm. Preferably, the or each rake member arm is pivotally connected to the frame about a substantially horizontal pivot axis between a rake member working position and a rake member transport position.

It is possible according to the invention that the or each rake member comprises a plurality of rake element arms, wherein not all but only a subset of the rake element arms is foldable as described above. In this case, the above described rake element arm is of a first foldable type, wherein the rake member comprises a plurality of rake element arms of a second type different from the first foldable type, in particular non-foldable. To reduce the transport height in the transport position, it is not necessary for all rake element arms to be foldable. If, for example only 2-6 or 4-6, such as 3 rake element arms of the or each rake member are foldable, the desired reduction in transport height can already be achieved.

The invention also relates to a rake member for working grass, hay or other crops on the field as described above.

An embodiment of the invention will now be described, by way of example only, with reference to the accompanying drawings, in which:
Figure 1 shows a perspective view of an exemplary embodiment of a machine according to the invention; and
Figure 2 shows a perspective view of a locking device arranged on a rake member of the machine of Figure 1.

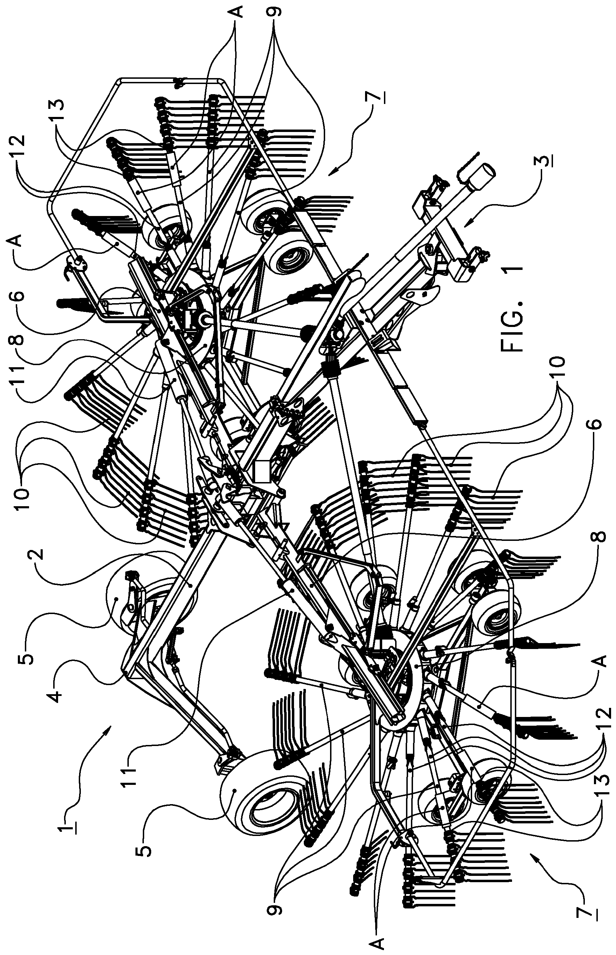

A machine for working grass, hay or other crops is generally denoted in figure 1 by reference numeral 1. In this exemplary embodiment, the machine 1 is a rotary rake. The machine 1 comprises a frame 2 having a front end 3 configured to be connected to a pulling vehicle, for example a tractor, and a rear end 4 provided with wheels 5 to support the frame 2. At each side of the frame 2, a rake member arm 6 having a fixed length is provided. A trolley carrying a rake member 7 can be displaced in a sliding manner along each rake member arm 6. However, the rake member arm 6 can be constructed in a different manner, for example as a telescopic arm.

Each rake member 7 comprises a centre body 8 that is rotatably connected to the trolley on the respective rake member arm 6. Multiple rake element arms or tine arms 9 are distributed about the circumference of the centre body 8 and extend from the centre body 8. At the distal ends of the rake element arms 9 rake elements 10, for example tines, are provided.

During use of the machine 1, when the frame 2 is pulled in a direction of travel over a field on which grass, hay or other crops are present, the rake members 7 are rotated about a substantially vertical axis of rotation of the centre body 8. As a result, the crops on the field are displaced by the rake elements 10 in order to arrange the crops in a desired configuration on the field.

The rake member arms 6 and the rake members 7 connected thereto are movable between a working position, in which the rake element arms 9 extend in a substantially horizontal plane (as shown in Figure 1), and a transport position in which the rake elements arm extend in a more upright plane, for example in a substantially vertical plane. Hydraulic cylinders 11 are provided to actuate the movement of the rake member arms 6 between the working position and the transport position.

When the machine is not used, it is desirable to bring the machine in a compact configuration. In particular for road transport, it is important that the machine does not exceed a maximum transport height. At the same time it is desirable that the working width during use, i.e. in the working position, is relatively large so that a wide strip of field can be handled by the machine 1.

In order to avoid that the machine becomes too high during transport, according to the invention, at least some of the rake element arms 9 comprise an inner arm part 12 and an outer arm part 13 that are pivotally connected to each other between a working position and a transport position. In the working position, the longitudinal axes of the inner arm part 12 and the outer arm part 13 of such a foldable rake element arm 9 coincide such that the configuration of the foldable rake element arms 9 in the working position substantially corresponds to the configuration of the other non-foldable rake element arms 9.

In the transport position, the outer arm parts 13 may be arranged in a folded position with respect to the inner arm parts 12 such that the maximum radial distance of the outer arm parts 13 with respect to the axis of rotation of the centre body 13 is smaller than the maximum radial distance of the outer arm parts 13 in the working position. This results in a reduced height of the machine 1, when the rake members 7 are pivoted upwards to the transport position, and the folded outer arms 13 are arranged at the upper side of the machine 1 in this transport position. The rotated outer arm parts 13 may also result in a reduced width in transport position.

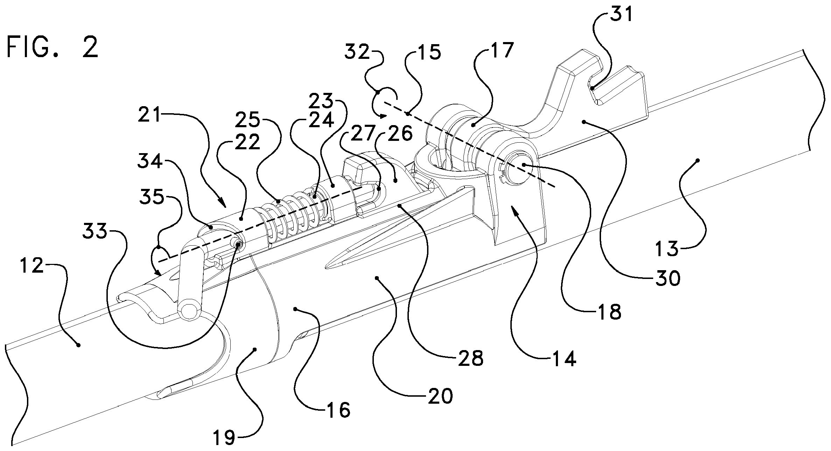

The rake element arms 9 having an inner arm part 12 and outer arm part 13 that are hingeable with respect to each other comprise a hinge 14 and a locking device. The hinge 14 and locking device are schematically indicated by boxes A in figure 1. The hinge 14 and the locking device are shown in more detail in figure 2.

In figure 2, the inner arm part 12 and the outer arm part 13 are shown in the working position. The inner arm part 12 and the outer arm part 13 are hingeable with respect to each other about a hinge 14 having a hinge axis 15. The hinge 14 is formed by a first hinge part 16 mounted on the inner arm part 12, a second hinge part 17 mounted on the outer arm part 13, and also a hinge pin 18.

The first hinge part 16 comprises a cylindrical part 19 which is mounted on the end of the inner arm part 12, and a recessed, for example half-open, cylindrical part 20 which protrudes from the end of the inner arm part 12 and configured to receive an end part of the outer arm part 13, when the outer arm part 13 is arranged in the working position. When the outer arm part 13 is received in the cylindrical part 20, forces exerted on the rake element arm may be more efficiently transferred from the outer arm part 13 onto the inner arm part 12. At the end of the first hinge part 16 remote from the end of the inner arm part 16, hinge elements are provided having openings to receive the hinge pin 18.

On the first hinge part 16, a locking pin housing 21 is mounted. The locking pin housing 21 comprises a first locking pin holder 22 and a second locking pin holder 23. Each of the first locking pin holder 22 and the second locking pin holder 23 comprises a locking pin receiving hole through which a locking pin 24 extends. The inner diameter of the locking pin receiving holes of the first and second locking pin holders 22, 23 substantially corresponds to the outer diameter of the locking pin 24 such that the locking pin 24 can slide in its longitudinal direction in the locking pin housing 21 between a locking position and a non-locking or releasing position. The direction of the sliding movement is substantially parallel to the longitudinal direction of the inner arm part 12. The locking pin 24 is biased by a coiled spring element 25 towards the locking position, e.g. in the shown embodiment towards the hinge pin 18.

On the outer arm part 13, a first slot element 26 having a first slot 27 is mounted. An opening 28 is provided in the first hinge part 16 to allow the slot element 26 through the first hinge part 16 in the position shown in figure 2. In the working position, the slot element 26 is arranged on the part of the outer arm part 13 between the hinge pin 18 and the end of the outer arm part 13 which is, in the working position, adjacent to the inner arm part 12. At the opposite side of the hinge pin 18, a second slot element 30 with a slot 31 is mounted on the outer arm part 13.

In the working position as shown in figure 2, the first slot 27 is aligned with the locking pin 24. Since the locking pin 24 is biased towards the locking position, the locking pin 24 is pushed by the spring element 25 into the first slot 27. This results in the locking pin 24 being reliably captured by the first slot 27 and, as a consequence, the inner arm part 12 and the outer arm part 13 are locked so as to remain aligned with respect to each other in the working position.

To release the locking pin 24 from the first slot 27, the locking pin 24 is moved against the biasing force of the spring element 25 towards the non-locking or releasing position, i.e. in this exemplary embodiment away from the hinge pin 18, until the locking pin 24 is no longer received in the first slot 27. To facilitate this movement of the locking pin 24 against the biasing force of the spring element 25, the locking pin 24 is provided with a cam 33 that protrudes from the circumferential outer surface of the locking pin 24, and the first locking pin holder 22 is provided with a cam surface 34.

The cam surface 34 and the cam 33 are configured in such a manner that rotation of the locking pin 24 about its longitudinal axis in the direction shown by arrow 35 will result in the cam 33 sliding along the cam surface 34 which is shaped such that the locking pin 24 will be pushed due to the rotating movement of the locking pin 24 towards the non-locking position.

The cam surface 34 may be provided with an indent for receiving the cam 33 in the non-locking position so that the locking pin 24 can be held by the indent in said position, i.e. when the locking pin 24 is accommodated in the indent it is prevented from being automatically pushed back to the locking position by the spring element 25. It is noted that such an indent is entirely optional. For example, in other embodiments, the biasing force of the spring element 25 may be insufficient to automatically push the locking pin 24 back to the locking position. It is also noted that any other device to move the locking pin 24 to the non-locking position may also be used.

When the locking pin 25 is held in the non-locking position, the outer arm part 13 can be pivoted with respect to the inner arm part 12 in the direction of the arrow 32. With this pivotal movement, the second slot 31 can be aligned with the locking pin 24. When the second slot 31 and the locking pin 24 are aligned, the locking pin 24 can be displaced back, i.e. such that the spring element 25 will move the locking pin 24 towards the locking position and therewith into the second slot 31. This results in the locking pin 24 being reliably secured inside the second slot 31 and, as a consequence, the inner arm part 12 and the outer arm part 13 are held in the transport position.

Thus, a single locking pin 24 is used to cooperate both with a first slot 27 to lock the outer arm part 13 with respect to the inner arm part 12 in the working position and with a second slot 31 to lock the outer arm part 13 with respect to the inner arm part 12 in the transport position.

The locking pin housing 21 and the locking pin 24 are designed such that the locking pin 24 can extend further towards the locking position than required to fully enter the first slot 27. This has the advantage that wear at the end of the locking pin 24 and/or wear in the first slot 27 does not result in play between the locking pin 24 and the first slot 27. Correspondingly, the locking pin housing 21 and the locking pin 24 may also be designed such that the locking pin 24 can extend further towards the locking position than required to fully enter the second slot 31 so that wear at the end of the locking pin 24 and/or wear in the second slot 31 does not result in play between the locking pin 24 and the second slot 31.

## Claims

1. A tine arm (9) for an agricultural machine (1) for working grass, hay or other crops on the field, wherein one or more tines (10) are mounted on the time arm, the tine arm comprising:
- a first arm part (12) and a second arm part (13) which are pivotally connected to each other between a working position and a transport position, and
- a locking device configured to lock the first arm part (12) with respect to the second arm part (13) in the working position,
wherein the locking device comprises:
- a locking pin (24) movably mounted on the first arm part (12) between a locking position and a non-locking or releasing position, and
- a first slot (27) and second slot (31) which are mounted on the second arm part (13), wherein the first slot (27) is arranged to receive the locking pin (24) in the locking position when the first arm part (12) and the second arm part (13) are positioned in the working position to lock the first arm part (12) with respect to the second arm part (13) in the working position, and wherein the second slot (31) is arranged to receive the locking pin (24) in the locking position when the first arm part (12) and the second arm part (13) are positioned in the transport position to lock the first arm part (12) with respect to the second arm part (13) in the transport position
- a hinge (14) that hingeably connects the first arm part (12) to the second arm part (13), wherein the hinge comprises a first hinge part (16) mounted on the first arm part (12) and a second hinge part (17) mounted on the second arm part (13), wherein the hinge (14) comprises a hinge axis (15) which is arranged at a position spaced from the end of the second arm part (13), wherein the first slot (27) is mounted on the second arm part (13) at a first side of the hinge axis (15), and **characterised in that** the second slot (31) is mounted on the second arm part (13) at a second side of the hinge axis (15) opposite to the first side.

2. The tine arm (9) of claim 1, wherein the locking pin (24) is movably mounted on the first hinge part (16).

3. The tine arm (9) of claim 2, wherein the first hinge part (16) comprises a cylindrical part (19) configured to be mounted on the end of the first arm part (12), and a recessed cylindrical part (20) configured to receive a part of the second arm part (13) in the working position.

4. The tine arm (9) of any of claims 1-3, wherein the locking pin (24) is biased towards the locking position.

5. The tine arm (9) of claim 4, wherein the locking pin (24) is biased towards the locking position by a spring element (25).

6. The tine arm (9) of any of the claims 1-5, wherein the locking pin (24) is movable with respect to the first arm part (12) in a direction substantially parallel to a longitudinal direction of the first arm part (12).

7. The tine arm (9) of any of the claims 1-6, wherein the locking device comprises a locking pin housing (21) configured to receive the locking pin (24).

8. The tine arm (9) of claim 7, wherein the locking pin (24) is rotatable about its longitudinal axis, wherein the locking pin (24) comprises a cam (33) extending at least partially transversely to the longitudinal axis of the locking pin (24) and wherein the locking pin housing (21) comprises a cam surface (34) configured to cooperate with the cam (33) such that by rotation of the locking pin (24) about its longitudinal axis the cam (33) moves along the cam surface (34) so as to move the locking pin (24) from its locking position towards its non-locking position and/or from the non-locking position towards the locking position.

9. The tine arm (9) of claim 8, wherein the locking pin housing (21) comprises two spaced locking pin holders (22, 23), each locking pin holder (22, 23) having a locking pin receiving hole with an inner diameter substantially corresponding to an outer diameter of the locking pin (24), wherein at least one of the locking pin holders (22, 23) comprises the cam surface (34).

10. An agricultural machine (1) for working grass, hay or other crops on the field, comprising:
- a frame (2),
- a rake member arm (6) mounted on the frame (2), wherein preferably the rake member arm (6) is pivotally connected to the frame (2) about a substantially horizontal pivot axis between a rake member working position and a rake member transport position,
- a rake member (7), the rake member (7) comprising:
• a centre body (8), rotatably mounted on the rake member arm (6),
• at least one tine arm (9) according to any of the preceding claims, the tine arm (9) extending from the centre body (8), and
• one or more tines (10) mounted on the tine arm (9).

11. The machine (1) of claim 10, wherein the first arm part (12) is an inner arm part connected to the centre body (8), and wherein the second arm part (13) is an outer arm part, wherein the one or more tines (10) are mounted on the outer arm part.

12. The machine of claim 10 or 11, wherein the tine arm (9) is of a first type, and wherein the rake member (7) comprises a plurality of tine arms (9) of a second type, wherein preferably the tine arms (9) of the second type are non-foldable.

## Patentansprüche

1. Zinkenarm (9) für eine landwirtschaftliche Maschine (1) zum Bearbeiten von Gras, Heu oder anderem Erntegut auf einem Feld, wobei eine oder mehrere Zinken an den Zinkenarm montiert sind, wobei der Zinkenarm das Folgende aufweist:
- einen ersten Armteil (12) und einen zweiten Armteil (13), die zwischen einer Arbeitsposition und einer Transportposition schwenkbar miteinander sind, und
- einer Festsetzeinrichtung, die zum Festsetzen des ersten Armteils (12) relativ zu dem zweiten Armteil (13) in der Arbeitsposition konfiguriert ist,
wobei die Festsetzeinrichtung das Folgende aufweist:
- einen Festsetzstift (24), der an dem ersten Armteil (12) zwischen einer Festsetzposition und einer Nicht-Festsetzposition oder Freigabeposition beweglich montiert ist, und
- einer ersten Nut (27) und einer zweiten Nut (31), die an dem zweiten Armteil (13) montiert sind, wobei die erste Nut (27) angeordnet ist, um den Festsetzstift (24) in der Festsetzposition aufzunehmen, wenn der erste Armteil (12) und der zweite Armteil (13) in der Arbeitsposition positioniert sind, um den ersten Armteil (12) relativ zu dem zweiten Armteil (13) in der Arbeitsposition festzusetzen, und wobei die zweite Nut (31) angeordnet ist, um den Festsetzstift (24) in der Festsetzposition aufzunehmen, wenn der erste Armteil (12) und der zweite Armteil (13) in der Transportposition positioniert sind, um den ersten Armteil (12) relativ zu dem zweiten Armteil (13) in der Transportposition festzusetzen
- ein Gelenk (14), das den ersten Armteil (12) gelenkig mit dem zweiten Armteil (13) verbindet, wobei das Gelenk einen an dem ersten Armteil (12) montierten ersten Gelenkteil (16) und einen an dem zweiten Armteil (13) montierten zweiten Gelenkteil (17) aufweist, wobei
das Gelenk (14) eine Gelenkachse (10) aufweist, die an einer Position beabstandet zu dem Ende des zweiten Armteils (13) angeordnet ist, wobei die erste Nut (17) an dem zweiten Armteil (13) an einer ersten Seite der Gelenkachse (15) montiert ist, und **dadurch gekennzeichnet, dass**
die zweite Nut (31) an dem zweiten Armteil (13) an einer zweiten Seite der Gelenkachse (15) gegenüberliegend zu der ersten Seite montiert ist.

2. Zinkenarm (9) nach Anspruch 1, wobei der Festsetzstift (24) beweglich an dem ersten Gelenkteil (16) montiert ist.

3. Zinkenarm (9) nach Anspruch 2, wobei der erste Gelenkteil (16) einen zylindrischen Teil (19), der konfiguriert ist, um an dem Ende des ersten Armteils (12) montiert zu werden, und einen vertieften zylindrischen Teil (20) aufweist, der zum Aufnehmen eines Teils des zweiten Armteils (13) konfiguriert ist.

4. Zinkenarm (9) nach einem der Ansprüche 1-3, wobei der Festsetzstift (24) in Richtung der Festsetzposition beaufschlagt ist.

5. Zinkenarm (9) nach Anspruch 4, wobei der Festsetzstift (24) durch ein Federelement (25) in Richtung der Festsetzposition beaufschlagt ist.

6. Zinkenarm (9) nach einem der Ansprüche 1-5, wobei der Festsetzstift (24) relativ zu dem ersten Armteil (12) in einer im Wesentlichen parallelen Richtung zu der Längsrichtung des ersten Armteils (12) beweglich ist.

7. Zinkenarm (9) nach einem der Ansprüche 1-6, wobei die Festsetzeinrichtung ein Festsetzstiftgehäuse (21) aufweist, das zum Aufnehmen des Festsetzstifts (94) konfiguriert ist.

8. Zinkenarm (9) nach Anspruch 7, wobei der Festsetzstift (24) um seine Längsachse drehbar ist, wobei der Festsetzstift (24) einen Nocken (33) aufweist, der sich mindestens teilweise quer zu der Längsachse des Festsetzstifts (24) erstreckt, und wobei das Festsetzstiftgehäuse (21) eine Nockenlauffläche (34) aufweist, die für eine Zusammenarbeit mit dem Nocken (33) konfiguriert ist, sodass aufgrund einer Drehung des Festsetzstifts (24) um seine Längsachse sich der Nocken (33) entlang der Nockenlauffläche (34) bewegt, sodass der Festsetzstift (24) von seiner Festsetzposition in Richtung seiner Nicht-Festsetzposition und/oder von der Nicht-Festsetzposition in Richtung der Festsetzposition bewegt wird.

9. Zinkenarm (9) nach Anspruch 8, wobei das Festsetzstiftgehäuse (21) zwei beabstandete Festsetzstifthalter (22, 23) aufweist, wobei jeder Festsetzstifthalter (22, 23) eine Festsetzstiftaufnahmebohrung mit einem Innendurchmesser aufweist, der im Wesentlichen einem Außendurchmesser des Festsetzstifts (24) entspricht, wobei mindestens einer der Festsetzstifthalter (22, 23) die Nockenlauffläche (34) aufweist.

10. Landwirtschaftliche Maschine (1) zum Bearbeiten von Gras, Heu oder anderem Erntegut auf dem Feld, mit:
- einem Rahmen (2),
- einem an dem Rahmen (2) montierten Rechenelementarm (6), wobei vorzugsweise der Rechenelementarm (6) um eine im Wesentlichen horizontale Schwenkachse zwischen einer Rechenelementarbeitsposition und einer Rechenelementtransportposition schwenkbar mit dem Rahmen (2) verbunden ist,
- einem Rechenelement (7) wobei das Rechenelement (7) das Folgende aufweist:
• einen Zentralkörper (8), der drehbar an dem Rechenelementarm (6) montiert ist,
• mindestens einen Zinkenarm (9) nach einem der vorhergehenden Ansprüche, wobei sich der Zinkenarm (9) von dem Zentralkörper (8) weg erstreckt, und
• einen oder mehrere Zinken (10), die an dem Zinkenarm (9) montiert sind.

11. Maschine (1) nach Anspruch 10, wobei der erste Armteil (12) ein innerer Armteil ist, der mit dem Zentralkörper (8) verbunden ist, und wobei der zweite Armteil (13) ein äußerer Armteil ist, wobei die eine oder mehreren Zinken (10) an dem äußeren Armteil montiert sind.

12. Maschine (1) nach Anspruch 10 oder 11, wobei der Zinkenarm (9) der eines ersten Typs ist, und wobei das Rechenelement (7) eine Mehrzahl von Zinkenarmen (9) eines zweiten Typs aufweist, wobei vorzugsweise Zinkenarme (9) des zweiten Typs nicht faltbar oder klappbar sind.

## Revendications

1. Bras de fourchon (9) destiné à une machine agricole (1) afin de traiter de l'herbe, du foin ou d'autres cultures dans le champ, dans lequel un ou plusieurs fourchons (10) sont montés sur le bras de fourchon, le bras de fourchon comprenant :
une première partie de bras (12) et une seconde partie de bras (13) qui sont reliées l'une à l'autre de manière à pouvoir pivoter entre une position de travail et une position de transport, et
un dispositif de verrouillage configuré de manière à verrouiller la première partie de bras (12) par rapport à la seconde partie de bras (13) dans la position de travail,
dans lequel le dispositif de verrouillage comprend :
une broche de verrouillage (24) montée sur la première partie de bras (12) de manière à pouvoir se déplacer entre une position de verrouillage et une position non verrouillée ou de libération, et
une première fente (27) et une seconde fente (31) qui sont montées sur la seconde partie de bras (13), dans lequel la première fente (27) est agencée afin de recevoir la broche de verrouillage (24) dans la position de verrouillage lorsque la première partie de bras (12) et la seconde partie de bras (13) sont positionnées dans la position de travail afin de verrouiller la première partie de bras (12) par rapport à la seconde partie de bras (13) dans la position de travail, et dans lequel la seconde fente (31) est agencée afin de recevoir la broche de verrouillage (24) dans la position de verrouillage lorsque la première partie de bras (12) et la seconde partie de bras (13) sont positionnées dans la position de transport de manière à verrouiller la première partie de bras (12) par rapport à la seconde partie de bras (13) dans la position de transport,
une charnière (14) qui relie de manière articulée la première partie de bras (12) à la seconde partie de bras (13), dans lequel la charnière comprend une première partie de charnière (16) montée sur la première partie de bras (12) et une seconde partie de charnière (17) montée sur la seconde partie de bras (13), dans lequel la charnière (14) comprend un axe de charnière (15) qui est agencé à une position espacée par rapport à l'extrémité de la seconde partie de bras (13), dans lequel la première fente (27) est montée sur la seconde partie de bras (13) au niveau d'un premier côté de l'axe de charnière (15), et **caractérisé en ce que** la seconde fente (31) est montée sur la seconde partie de bras (13) au niveau d'un second côté de l'axe de charnière (15) opposé au premier côté.

2. Bras de fourchon (9) selon la revendication 1, dans lequel la broche de verrouillage (24) est montée de manière à pouvoir se déplacer sur la première partie de charnière (16).

3. Bras de fourchon (9) selon la revendication 2, dans lequel la première partie de charnière (16) comprend une partie cylindrique (19) configurée de manière à être montée sur l'extrémité de la première partie de bras (12), et une partie cylindrique en creux (20) configurée de manière à recevoir une partie de la seconde partie de bras (13) dans la position de travail.

4. Bras de fourchon (9) selon l'une quelconque des revendications 1 à 3, dans lequel la broche de verrouillage (24) est appliquée vers la partie de verrouillage.

5. Bras de fourchon (9) selon la revendication 4, dans lequel la broche de verrouillage (24) est appliquée vers la position de verrouillage par un élément élastique (25).

6. Bras de fourchon (9) selon l'une quelconque des revendications 1 à 5, dans lequel la broche de verrouillage (24) peut être déplacée par rapport à la première partie de bras (12) dans une direction sensiblement parallèle à une direction longitudinale de la première partie de bras (12).

7. Bras de fourchon (9) selon l'une quelconque des revendications 1 à 6, dans lequel le dispositif de verrouillage comprend un logement de broche de verrouillage (21) configuré de manière à recevoir la broche de verrouillage (24).

8. Bras de fourchon (9) selon la revendication 7, dans lequel la broche de verrouillage (24) peut tourner autour de son axe longitudinal, dans lequel la broche de verrouillage (24) comprend une came (33) s'étendant au moins partiellement transversalement par rapport à l'axe longitudinal de la broche de verrouillage (24) et dans lequel le logement de broche de verrouillage (21) comprend une surface de came (34) configurée de manière à coopérer avec la came (33) de telle sorte que, par la rotation de la broche de verrouillage (24) autour de son axe longitudinal, la came (33) se déplace le long de la surface en came (34) afin de déplacer la broche de verrouillage (24) à partir de sa position de verrouillage vers sa position non verrouillée et/ou à partir de la position non verrouillée vers la position de verrouillage.

9. Bras de fourchon (9) selon la revendication 8, dans lequel le logement de broche de verrouillage (21) comprend deux supports de broche de verrouillage espacés (22, 23), chaque support de broche de verrouillage (22, 23) comportant un orifice de réception de broche de verrouillage présentant un diamètre interne correspondant sensiblement à un diamètre externe de la broche de verrouillage (24), dans lequel au moins l'un des supports de broche de verrouillage (22, 23) comprend la surface en came (34).

10. Machine agricole (1) destinée à traiter de l'herbe, du foin ou d'autres cultures dans le champ, comprenant :
un châssis (2),
un bras d'élément de râteau (6) monté sur le châssis (2), dans laquelle, de préférence, le bras d'élément de râteau (6) est relié au châssis (2) de manière à pouvoir pivoter par rapport à un axe de pivot sensiblement horizontal entre une position de travail d'élément de râteau et une position de transport d'élément de râteau,
un élément de râteau (7), l'élément de râteau (7) comprenant :
un corps central (8), monté de manière à pouvoir tourner sur le bras d'élément de râteau (6),
au moins un bras de fourchon (9) selon l'une quelconque des revendications précédentes, le bras de fourchon (9) s'étendant à partir du corps central (8), et
un ou plusieurs fourchons (10) montés sur le bras de fourchon (9).

11. Machine (1) selon la revendication 10, dans laquelle la première partie de bras (12) est une partie de bras interne reliée au corps de central (8) et dans laquelle la seconde partie de bras (13) est une partie de bras externe, dans laquelle le ou les fourchons (10) sont montés sur la partie de bras externe.

12. Machine selon la revendication 10 ou 11, dans laquelle le bras de fourchon (9) est d'un premier type et dans laquelle l'élément de râteau (7) comprend une pluralité de bras de fourchon (9) d'un second type, dans laquelle, de préférence, les bras de fourchon (9) du second type ne peuvent pas être pliés.
